# EUROPÄISCHE PATENTSCHRIFT

(11) **EP 2 551 537 B1**
(45) Veröffentlichungstag und Bekanntmachung des Hinweises auf die Patenterteilung: **15.04.2015**
(21) Anmeldenummer: 12165917.1
(22) Anmeldetag: 27.04.2012
(51) Int. Cl.: F16C 19/44, F16C 27/08, F16C 33/34

(54) **Losradlagerung für ein Kraftfahrzeuggetriebe**
Idler bearing for a motor vehicle transmission system
Palier de roue libre pour boîte de vitesses de véhicule automobile

(30) Priorität: 28.07.2011 DE 102011080021; 28.07.2011 DE 102011080027
(43) Veröffentlichungstag der Anmeldung: 30.01.2013
(73) Patentinhaber: Schaeffler Technologies AG & Co. KG, 91074 Herzogenaurach (DE)
(72) Erfinder: Metten, Norbert, 91086 Aurachtal (DE); During, Tom-Michel, 91052 Erlangen (DE)

(56) Entgegenhaltungen:
- DE-A1- 10 037 401
- DE-A1-102007 057 045
- DE-C- 826 384
- DE-U- 7 139 580

## Beschreibung

Die Erfindung betrifft eine Losradlagerung für ein Kraftfahrzeuggetriebe, das mindestens ein über ein Radiallager auf einer Getriebewelle gelagertes Losrad aufweist, wobei senkrecht zu einer Achse der Getriebewelle ein erster Anschlag angeordnet ist und mindestens ein erstes Axiallager zwischen dem ersten Anschlag und dem Losrad angeordnet ist, wobei das erste Axiallager Wälzkörper aufweist.

### Hintergrund der Erfindung

Losradlager sind Wälzlagerungen, mit denen Losräder gegenüber einer Welle drehbar radial gelagert sind. Derartige Anordnungen mit Radiallagern sind in DE - AS - 1 575 611 beschrieben. Darüber hinaus sind in DE - AS - 1 575 611 auch die Probleme mit Axiallagerungen von Losrädern beschrieben. So zeigt z.B. JP02163509A eine Losradlagerung eines Kraftfahrzeuggetriebes mit einem Radiallager und mit einem Axiallager.

Die Besonderheit in Losradlagerungen ist darin zu sehen, dass diese nahezu lastfrei rotieren, wenn die Losräder ohne Drehmomentübertragung auf der Getriebewelle rotierend mitgeschleppt werden, und nahezu still stehend hohe Lasten aufnehmen, wenn das jeweilige Zahnrad mit der Getriebewelle gekuppelt ist. Die Probleme, die mit diesen Besonderheiten verbunden sind, sind dem Fachmann bekannt und beispielsweise in DE-AS - 1 575 611 geschildert.

Axiallager müssen als Losradlager immer dann eingesetzt werden, wenn an den Losrädern auch axiale Kräfte wirken, weil die zur radialen Lagerung der Losräder eingesetzten Rollenlager keine axialen Kräfte aufnehmen können. Der sogenannte Axialschub an den Losrädern entsteht bekanntermaßen zum Beispiel an Losrädern mit Schrägverzahnung oder durch das Schrauben der Rollen der Radiallagerung. Aus DE-AS - 1 575 611 ist bekannt, zur Aufnahme des Axialschubes Axialrollenlager in der Ausführung von Axialzylinderrollenlagern oder Axialnadellagern einzusetzen. Es ist bekannt, das die Rollen von Axiallagern bei Rotation in nahezu lastfreien Betriebszuständen zum Schlupf und zum sogenannten Anschmieren (Fressen) an den Laufbahnen neigen. Darüber hinaus können die Losräder innerhalb der durch axiale Spiele vorgegebenen Strecke während des geschleppten Betriebzustandes undefiniert hin und her wandern. Deshalb müssen Axialrollenlager auch im lastfreien Betrieb immer mit einer Vorlast vorgespannt sein.

Eine gattungsgemäße Losradlagerung für ein Kraftfahrzeuggetriebe ist in der DE 100 37 401 A1 offenbart. Hier ist neben dem über ein Radiallager auf einer Getriebewelle gelagerten Losrad auch senkrecht zu einer Achse der Getriebewelle ein erster Anschlag und mindestens ein erstes Axiallager zwischen dem ersten Anschlag und dem Losrad angeordnet. Dabei ist das Axiallager, wie auch beim zuvor genannten Stand der Technik, vorzugsweise ein Axialzylinderrollenlagern oder Axialnadellager, um den Axialschub aufnehmen zu können,

Eine Anordnung mit spielfrei vorgespannten radialen Losradlagerungen zeigt DE 197 34 980 A1. Wenn das Losrad mit der Welle gekuppelt ist, legen sich die Wälzkörper bei Rotation der Getriebewelle aufgrund der Schwerkraft außen an dem Losrad an. Der Kontakt der Rollen zur Getriebewelle ist aufgrund des Radialspieles zumindest partiell aufgehoben. Wenn das Losrad aus dem gekuppelten Zustand in den geschleppten Betriebszustand wechselt und das Losradlager rotierend angeschleppt wird, können die Rollen aufgrund der Massenträgheit des Lagers und aufgrund des fehlenden Kontakts mit der Laufbahn auch anschmieren oder mit Verschleiß schlupfen. Es wird deshalb eine Losradlagerung vorgeschlagen, in der Losradlagerung hohle Rollen, sogenannte Tunnelrollen, einzusetzen, deren Durchmesser so geringfügig größer ist als der Durchmesser der anderen Rollen, dass diese das radiale Spiel überbrücken. Die Rollen sind elastisch ausgebildet und radial zwischen die Wälzlaufbahnen der Losradlagerung gespannt.

Weiterhin ist auch bekannt, dass bei Betrieb der Losradlagerungen hochfrequente Schwingungen entstehen, die als Geräusche das sogenannte Losradkreischen hervorrufen.

### Beschreibung der Erfindung

Der Erfindung liegt die Aufgabe zugrunde, ein Radiallager und eine Losradlagerung für ein Losrad eines Kraftfahrzeuggetriebes zu schaffen, mit denen die vorgenannten Nachteile vermieden werden können.

Die Aufgabe wird nach den Merkmalen des Anspruchs 1 gelöst.

Das erste Axiallager weist mindestens eine Tunnelrolle auf. Dabei ist die mindestens eine Tunnelrolle des ersten Axiallagers geschlitzt. Zudem weist die mindestens eine Tunnelrolle des ersten Axiallagers einen größeren Außendurchmesser als die Wälzkörper des ersten Axiallagers auf.

Eine Ausgestaltung der Erfindung sieht vor, dass die Losradlagerung für ein Kraftfahrzeuggetriebe ein zweites Axiallager zwischen einem zweiten Anschlag und dem Losrad aufweist welches vorzugsweise auch eine Tunnelrolle aufweist.

Die Axiallager weisen bevorzugt jeweils mindestens zwei Tunnelrollen in einem Käfig auf.

Unabhängig von der Anzahl der Tunnelrollen im Käfig, ist der Außendurchmesser der mindestens einen Tunnelrolle vorzugsweise derart bemessen, dass das Losrad axial vorgespannt auf der Getriebewelle positionierbar ist, so dass keine undefinierte Axialverschiebung des Losrades mehr möglich ist. Die Tunnelrollen weisen einen Außendurchmesser auf, der geringfügig größer ist als der Durchmesser der übrigen Rollen im Lager. Der Wert, um den der Durchmesser größer ist, entspricht dem maximal möglichen axialen Spiel zuzüglich eines Korrekturmaßes, das die Vorspannung der Axiallageranordnung erhält und in dem auch die Vergrößerung des Spiels durch unterschiedliche Wärmedehnung berücksichtigt sein kann Dadurch ist das Losrad axial spielfrei zwischen den Axiallagern eingespannt. Dies ermöglicht eine individuelle Positionierung des Losrades im Getriebe, wie vorzugsweise mittig im axialen Bauraum, so dass die Reibung und das Schleppmoment optimiert werden und zum anderen der Ölfluss verbessert wird.

Unter Anschläge können in diesem Zusammenhang alle Bauteile, wie Axialscheiben; Zahnräder, Wellenabsätze oder Anlaufscheiben verstanden werden. Sicherungsringe können auf der Getriebewelle axial in einer Ringnut als axial belastbare Schulter eingesetzt werden und dienen zur Festlegung des Radiallagers. Weiterhin können als Anschläge beispielsweise auch Abstandsscheiben, Distanzscheiben, Laufscheiben, Dichtscheiben, usw. verstanden werden. Eine erste Ausführungsform der Erfindung sieht vor, dass das erste Axiallager und das zweite Axiallager jeweils mindestens zwei Tunnelrollen rollend halten,
wobei die mindestens zwei Tunnelrollen dann gleich verteilt am Umfang des Käfigs angeordnet sind.

Denkbar ist aber auch, das erste und zweite Axiallager mit jeweils mindestens einer Tunnelrolle und/oder mit Tellerfedern vorzuspannen, wobei die Tellerfedern ebenso wie Tunnelrollen elastisch vorgespannt sind. Ebenso ist denkbar, dass ein erstes Axiallager mit mindestens einer Tunnelrolle und ein zweites angefedertes Axiallager mit Tellerfedern eingesetzt werden.

Losräder sind Zahnräder, die auf einer Getriebewelle angeordnet sind und die in lastfreien Zuständen relativ zur Getriebewelle, beispielsweise zu einer Getriebehauptwelle, rotieren. Die Losräder stehen im ständigen Zahneingriff mit einem weiteren Zahnrad, das in der Regel fest auf einer weiteren Getriebewelle eines Kfz-Getriebes sitzt. Auf der Getriebewelle sitzen mehrere der Losräder, von denen jedes im Zahneingriff mit einem der Zahnräder auf der weiteren Getriebewelle steht. Losräder werden je nach Schaltzustand von dem jeweiligen auf der weiteren Getriebewelle sitzenden Zahnrad mit Drehmomenten beaufschlagt oder mitgeschleppt. Wenn ein Gang eingelegt ist, ist eines der Losräder drehstarr mit der Getriebehauptwelle gekuppelt. Die weitere Getriebewelle ist von einer Getriebeeingangswelle aus angetrieben und mit ihr die auf der weiteren Getriebewelle sitzenden Zahnräder, wobei über eines der Zahnräder Drehmomente auf das mit der Getriebewelle gekuppelte Losrad und damit auf die Getriebewelle übertragen werden. Die anderen der Losräder werden durch die angetriebenen Zahnräder der weiteren Getriebewelle lastfrei mitgeschleppt. Wenn ein anderer Gang geschaltet wird, wird die drehstarre Verbindung zwischen dem Losrad und der Getriebehauptwelle ausgekuppelt und zwischen einem anderen der Losräder und der Getriebewelle eingekuppelt.

Moderne Losradlagerungen sind Wälzlager in Form von Rollenlagern. Die Rollenlager bestehen aus Rollen und in der Regel auch aus Käfigen. Rollen sind in ihrer Grundform außenzylindrisch ausgebildete rotationssymmetrische Körper, mit zwei Stirnseiten. Die Mantelflächen können von der außenzylindrischen Grundform abweichend ballig ausgeführt sein. Die Stirnseiten sind eben, wahlweise konkav oder konvex. Es können auch zusätzlich hohle Rollen ohne Schlitz vorgesehen sein. Die Rollen der Losradlager sind in der Regel Nadeln. Die Rollen sind in den Käfigen gehalten und geführt. In Radiallagern sind die Rollen mit ihren Rotationsachsen zueinander und zur Rotationsachse des Lagers parallel oder leicht verschränkt angeordnet.

Die Laufbahnen der Wälzlager sind entweder zylindrische Oberflächenabschnitte auf den Getriebewellen bzw. in Zahnrädern oder werden durch die Oberflächen von Lagerringen gebildet.

Mit einer Tunnelrolle aus der erfinderischen Losradlagerung kann auch ein radial spielfreies Rollen- oder Nadellager einer Losradlagerung versehen werden. Das Losradlager weist einen Käfig auf, der eine Vielzahl von Nadeln und wahlweise eine, zwei oder mindestens drei Tunnelrollen hält.

Die mindestens drei Tunnelrolle sind dabei gleichmäßig verteilt am Umfang der Getriebewelle im Käfig angeordnet. Das erfindungsgemäße Radiallager für ein Losrad eines Kraftfahrzeuggetriebes umfasst einen Käfig, der mindestens eine Wälzkörperreihe mit einer Vielzahl von Wälzkörpern in Wälzkörpertaschen rollend hält.

Käfige von Radiallagern sind hohlzylindrische einteilig umfangsseitig geschlossene oder einmal umfangsseitig geschlitzte in ihren Umrissen hohlzylindrische oder umfangsseitig benachbarte und umfangsseitig zusammen passende segmentförmige Bauteile, die radial durchgängige Fenster, sogenannte Taschen, aufweisen. Die Werkstoffe der Käfige sind Metalle oder Kunststoffe. Käfige von Axiallagern sind scheibenförmige mit Taschen durchsetzte Bauteile.

In Axiallagern verlaufen die Rotationsachsen der Rollen in der Regel konzentrisch auf Strahlen, die radial senkrecht von der Rotationsachse des Axiallager bzw. des Losrades abgehen, oder sind in der Ebene mit den Strahlen zu diesen Strahlen leicht verschränkt.

Die Laufbahnen der Wälzlager sind entweder zylindrische Oberflächenabschnitte auf den Getriebewellen bzw. in Zahnrädern oder werden durch die Oberflächen von Lagerringen gebildet. In Axiallagern sind die Laufbahnen Kreisringflächen, die an Zahnrädern, an Axialscheiben oder an Gehäuse- bzw. Wellenabschnitten ausgebildet sind.

Als Tunnelrollen sind in diesem Fall hohle Rollen, vorzugsweise hohlzylindrisch ausgebildete Rollen, zu verstehen. Zumindest eine dieser Tunnelrollen ist pro Wälzkörperreihe in Umfangsrichtung zwischen den Rollen des Rollenlagers angeordnet. Da die Tunnelrollen hohlzylindrisch ausgebildet sind, sind diese elastischer als die anderen Rollen, deren Grundköper von ihrem Material ausgefüllt ist. Tunnelrollen weisen deshalb Geräusche dämpfende Eigenschaften auf. Durch den Schlitz ist die Tunnelrolle elastisch noch nachgiebiger und deren Dämpfungsverhalten noch besser als das einer geschlossenen Hohlrolle. Der Längsschlitz erstreckt sich in radialer Richtung durchgängig durch die Wand. und unterbricht diese somit in Umfangsrichtung einmal vollständig.

Der Längsschlitz der Tunnelrolle in dem Radiallager zur Lagerung eines Losrades überstreicht danach vom ersten Ende zum zweiten Ende der Tunnelrolle entlang der Wandung einen Mittelpunktswinkel µ bezüglich des Querschnitts der Tunnelrolle bis 360°. Der Mittelpunktswinkel kann in diesem Falle auch als Teilwinkel < 360° oder als Vollwinkel = 360° eines Kreises bezeichnet werden, dessen Kreislinie beispielsweise den Umfang der Tunnelrolle beschreibt. Der gesamte Umfang der Mantelfläche ist in beliebigen Querschnitten (quer zur Rotationsachse der Tunnelrolle) durch den Vollwinkel von 360° beschrieben. Die Erfindung sieht also vor, dass der Schlitz vom Anfang zum Ende und zurück so verläuft, dass er den Mantel in Umfangsrichtung höchstens einmal überstreicht.

Unregelmäßigkeiten an der vorzugsweise sehr glatten Oberfläche von Wälzkörpern verursachen im Wälzkontakt Spannungsspitzen und fördern Verschleiß an Rollen und Wälzlaufbahnen. Das trifft auch für Schlitze zu. Der spiralförmig ausgebildete Schlitz der Rollen nach DE 197 34 980 A1 steht permanent an mehreren Stellen und mit beiden Laufbahnen im Wälzkontakt, so dass die zuvor genannten Nachteile besonders zum Tragen kommen. Die erfindungsgemäße Anordnung weist durch die Begrenzung des Winkels auf max. 360°, mit dem der Schlitz die Rolle überstreicht, den Vorteil auf, dass die Anzahl der Kontaktstellen gegenüber diesem bekannten Stand der Technik stark reduziert ist und damit die Risiken erhöhten Verschleißes geringer sind.

Die Ausgestaltung der Erfindung sieht vor, dass der Schlitz sich über weniger als die Hälfte der Mantelfläche erstreckt, also vom ersten Ende zum zweiten Ende der Tunnelrolle entlang der Wandung der Tunnelrolle einen Mittelpunktswinkel (µ) bezüglich des Querschnitts der Tunnelrolle von weniger als 180° überstreicht. Vorzugsweise erstreckt sich der Schlitz also innerhalb der Hälfte des Umfangs der Mantelfläche, so dass der Teilwinkel vom Vollwinkel 360° abweichend nur < / = 180° ist. Mit einer derartigen Ausbildung ist die Anzahl der Kontaktstellen des Schlitzes bei rotierender Rolle mit den Wälzlaufbahnen noch weiter reduziert.

Die Begrenzung auf den Umfangsbereich von 180°) wirkt sich auch vorteilhaft auf die Fertigung einer Tunnelrolle dieses Typs aus, die in diesem Fall aus Flachmaterial gebogen werden kann. Dabei werden die Schnittenden des zylindrisch gebogenen Flachmaterials solange aufeinander zugeführt, bis diese sich in Umfangsrichtung mit Abständen gegenüberliegen, die die Breite des Schlitzes begründen. Tunnelrollen, deren Längsschlitz sich dagegen nahezu über den gesamten Umfang erstreckt (Mittelspunktswinkel bis 360°) müssen dagegen im Ansatz spiralförmig gewickelt werden, was fertigungstechnisch aufwändiger ist, wenn Rollen mit hohen Genauigkeiten hergestellt werden sollen.

Die Tunnelrolle ist mit einem von einem ersten Ende der Tunnelrolle zu einem zweiten Ende der Tunnelrolle verlaufenden Längsschlitz versehen, der unter einem Winkel zu einer Achse, entweder der Rotationsachse oder zu einer Parallelen der Rotationsachse der Tunnelrolle in einer Wandung der Tunnelrolle geneigt. Also ist der Schlitz nicht achsparallel zur Rotationsachse der Tunnelrolle ausgerichtet, sondern verläuft so schräg zu dieser, dass der mit Winkeln α zu der Rotationsachse der Tunnelrolle von einem ersten Ende der Tunnelrolle zu einem zweiten Ende der Tunnelrolle verläuft, welche vorzugsweise 1 ° = / < α < / =45° sind. Die Winkel müssen im Verlauf des Schlitzes nicht gleich zueinander sein. Es kann also auch sein, dass der Schlitz kurvenartig oder zackenartig verläuft oder beliebig die Richtung wechselnd auslenkt weil er in beliebige Richtungen und mit verschiedenen Winkeln von der parallelen Linie auslenkt.

Die europäische Patentanmeldung EP 1 921 334 A2 zeigt ein Nadellager. Mindestens eine Nadel des Nadellagers ist dabei elastisch-nachgiebig ausgebildet, falls eine Last auf die äußere Fläche des Nadellagers ausgeübt wird. Die elastisch-verformbare Nadel besitzt dabei einen etwas größeren äußeren Durchmesser als die anderen nicht elastisch-verformbaren Nadeln. Die elastische Nachgiebigkeit der Nadeln wird dadurch erreicht, dass die Nadeln eine Hohlbohrung aufweisen und entlang der Länge der Nadeln parallel zu den Mantellinien und zur Rotationsachse ein Längsschlitz eingebracht ist, der geradlinig entlang der Wandung der Nadel verläuft. Die so ausgebildete elastischnachgiebige Nadel hat den einen Nachteil, dass der gerade Schlitz bei der Rollbewegung des Lagers über seine gesamte Länge mit den Rändern des Schlitzes im Wälzkontakt mit der Wälzlaufbahn steht. Derartige Wälzlager sind nur gering belastbar und dürfen nur mit geringen Drehzahlen rotieren oder nur Schwenken, weil die Kantenberührung im Wälzkontakt sehr hohe Spannungsspitzen erzeugt, wodurch die Rollen und Wälzlaufbahn beschädigt werden kann. Darüber hinaus erzeugt der pro Umdrehung einmal auf jede der Wälzlaufbahn treffende Schlitz störende Geräusche.

Die Tunnelrollen federn unter Last elastisch in einer Kontaktzone ein und wälzen an dieser ab, welche mit einer Kontaktlinie also mit Linienberührung an den Wälzlaufbahnen beschrieben werden kann, wobei die Kontaktlinie im Idealfall parallel zur Rotationsachse der Tunnelrolle ausgerichtet ist. Der Vorteil der schrägen Ausrichtung des Schlitzes liegt darin, dass bei Rotation des Lagers und Abwälzen der Tunnelrolle nicht der gesamte Schlitz auf einmal im Linienkontakt mit der/den jeweiligen Wälzlaufbahnen steht, sondern nur der Teil des Schlitzes am Schnittpunkt mit der Kontaktlinie. Dadurch wird Verschleiß vermieden und werden Geräusche reduziert.

Das Verhältnis von Außendurchmesser zu Wanddicke bestimmt die Elastizität, mit der die Tunnelrolle reagiert. Einerseits muss die Tunnelrolle elastisch nachgiebig genug sein, um sich unter Vorspannung ins Lager montieren zu lassen und um unter hohen Lasten auch auf den Durchmesser der anderen Rollen einzufedern. Andererseits muss die Tunnelrolle auch steif genug ausgebildet sein um die Spielfreiheit des Radiallagers zu gewährleisten. Ein Quotient aus der Wanddicke und dem Außendurchmesser weist vorzugsweise einen Wert von 0,04 bis 0,2 auf.

Der Typ der Rolle wird durch ein Verhältnis der Länge der Tunnelrolle zum Außendurchmesser bestimmt. Nadeln sind Rollen, deren Länge mindestens dem Dreifachen ihres Nenndurchmessers der Außenmantelfläche entspricht. Zylinderrollen sind dementsprechend Rollen deren Länge kleiner ist als das Dreifache des Nenndurchmessers der Rolle.

Darüber hinaus hat dieses Verhältnis bei Tunnelrollen auch Einfluss auf die Steifigkeit bzw. Elastizität, wenn die Wandstärke mit berücksichtigt wird. Je länger die Rolle, umso steifer ist diese. Je kürzer umso elastischer ist deren Reaktion. So ist es denkbar, die Steifigkeit der Tunnelrollen und damit den Grad der Spieleinstellung des Rollenlagers dadurch zu beeinflussen, dass die Tunnelrolle(n) im Lager länger oder kürzer als die üblichen Rollen sind. Vorzugsweise entspricht der Quotient aus der Länge der Tunnelrolle und deren Außendurchmesser einem Wert von 0,8 bis 4,0.

Der Schlitz muss in Umfangsrichtung gerichtet so breit sein, dass die Tunnelrollen ungehindert radial und umfangsseitig auf das radiale Maß der übrigen Rollen einfedern können Der in der äußeren Wandung der Tunnelrolle angebrachte Längsschlitz weist deshalb vorzugweise eine Breite mit einem Wert von 0,1 mm bis 0,7 mm auf.

Das Material aus dem die Tunnelrolle gefertigt ist, kann 16mnCr5 oder Ct45- oder 100Cr6 oder 1 00CrMn6 sein.

### Beschreibung der Figuren

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Radiallager für ein Losrad eines Kraftfahrzeuggetriebes ausgestaltet sein kann und stellen somit keine abschließende Begrenzung der Erfindung dar.

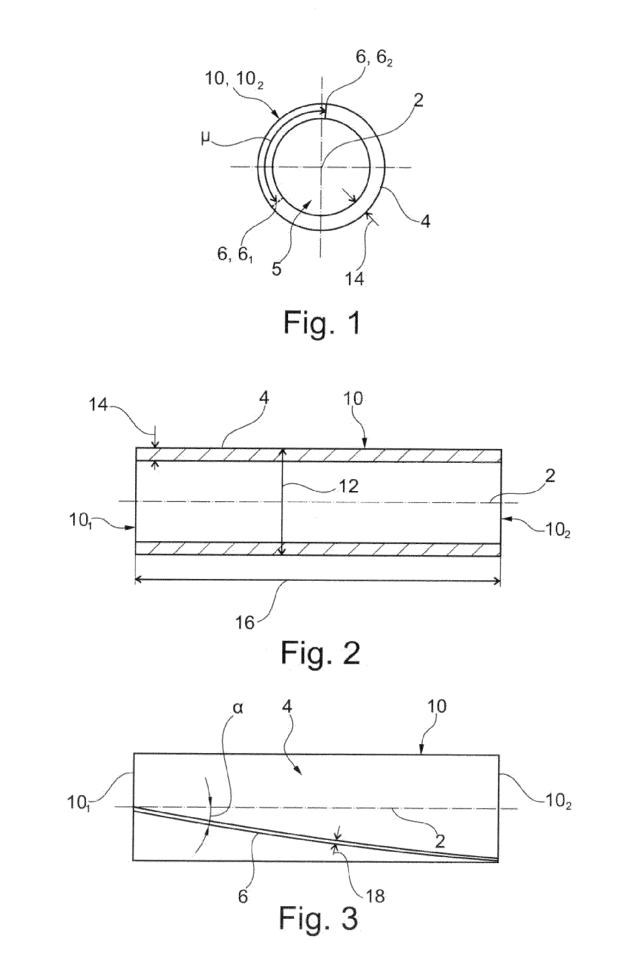

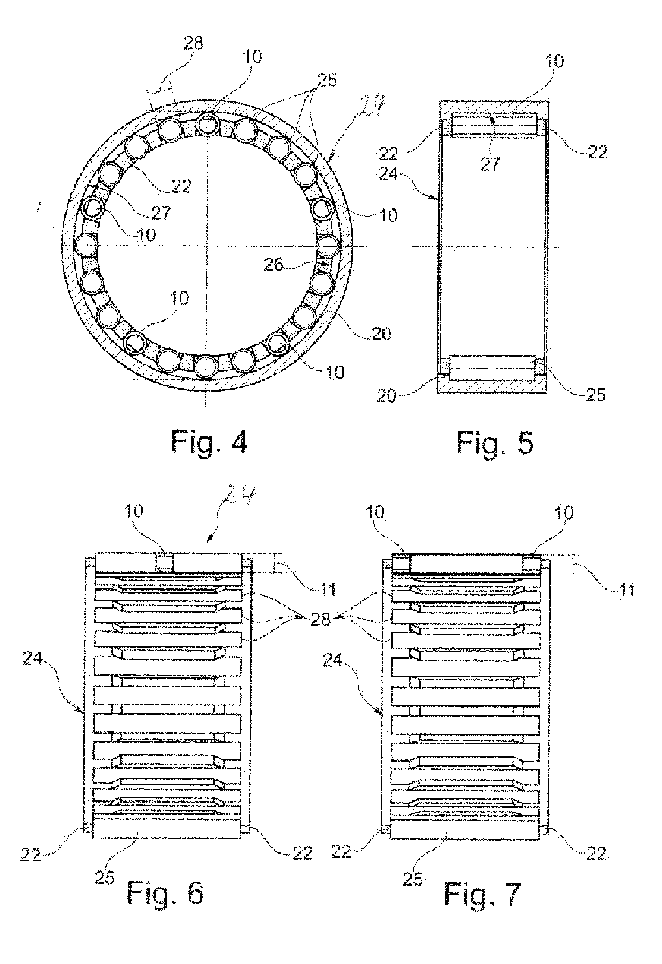

**Figur 1** zeigt eine Ansicht einer Tunnelrolle 10, die bei einem Radiallager 1 (s. Figuren 4 bis 11) Verwendung findet, von einem ersten Ende 10₁ oder einem zweiten Ende 10₂ her, wobei dies hier ohne Beschränkung der Allgemeinheit das zweite Ende 10₂ für eine nachfolgende Erläuterung des Mittelpunktswinkels µ sei. Das erste Ende 10₁ ist somit in der Darstellung nach Fig. 1 nicht zu sehen. Die Tunnelrolle 10 besteht aus einer Wandung 4 und hat eine zentrale Bohrung 5 ausgebildet. Die zentrale Bohrung 5 ist symmetrisch um die Achse 2 der Tunnelrolle 10 angeordnet. Die Wandung 4 der Tunnelrolle 10 besitzt eine Wanddicke 14.

Ein Längsschlitz 6 verläuft in der Wandung 4 vom ersten Ende 10₁ der Tunnelrolle 10 zum zweiten Ende 10₂ der Tunnelrolle 10. Der Endabschnitt des Längsschlitzes 6 am zweiten Ende 10₂ sei mit 6₂ bezeichnet. Der Endabschnitt des Längsschlitzes 6 am ersten Ende 10₁ sei mit 6₁ bezeichnet und, da nicht sichtbar in der Darstellung nach Fig. 1, lediglich als Punktlinie angedeutet. Die Achse 2 verläuft durch den Mittelpunkt des Querschnitts der Tunnelrolle 10. Der Längsschlitz 6 überstreicht vom ersten Ende 10₁ zum zweiten Ende 10₂ der Tunnelrolle 10 entlang der Wandung 4 einen Mittelpunktswinkel µ bezüglich des Querschnitts der Tunnelrolle 10 von weniger als 180°.

**Figur 2** zeigt den Querschnitt durch die Tunnelrolle 10 entlang der Länge 16 der Tunnelrolle 10. Die Tunnelrolle 10 weist ein erstes Ende 10₁ und ein zweites Ende 102 auf. Die Tunnelrolle 10 besitzt einen Außendurchmesser 12. Der Außendurchmesser 12 bemisst sich von der Außenseite der Wandung 4 der Tunnelrolle 10 zur gegenüberliegenden Außenseite der Wandung 4 der Tunnelrolle 10.

**Figur 3** zeigt eine Seitenansicht der Tunnelrolle 10, wobei der Verlauf des Längsschlitzes 6 entlang der äußeren Wandung 4 der Tunnelrolle 10 erkennbar ist. Der Längsschlitz 6 verläuft dabei vom ersten Ende 10₁ zum zweiten Ende 10₂ der Tunnelrolle 10. Der Längsschlitz 6 ist unter einem Winkel α gegenüber der Achse 2 der Tunnelrolle 10 geneigt. Der Längsschlitz 6 kann Breiten 18 in Bereichen von 0,1 mm bis 0,7 mm aufweisen und ist an einer Rolle in seinem gesamten Verlauf vorzugsweise mit einem der Werte gleich breit.

Die Tunnelrolle 10 ist bezüglich ihres Außendurchmessers 12 und der Wanddicke 14 bevorzugt derart abgestimmt, dass ein Quotient aus der Wanddicke 14 und dem Außendurchmesser einen Wert zwischen 0,04 bis 0,2 aufweist. Analog hierzu ist die Länge 16 der Tunnelrolle 10 in Bezug auf den Außendurchmesser 12 bevorzugt derart abgestimmt, dass ein Quotient aus der Länge 16 und dem Außendurchmesser 12 einen Wert zwischen 0,8 bis 4,0 aufweist. Der Außendurchmesser 12 der Tunnelrolle 10 ist bevorzugt zwischen 2 mm bis 10 mm.

Figur 4 zeigt eine erste Ausführungsform eines Radiallagers 24 für ein Losrad 20 eines Kraftfahrzeuggetriebes, das mindestens eine Wälzkörperreihe (siehe Fig. 5 bis Fig. 7) mit einer Vielzahl von Wälzkörpern 25, vorzugsweise Nadeln, in Wälzkörpertaschen 28 rollend haltert. Neben den Wälzkörpern 25 sind fünf Tunnelrollen 10 gleich verteilt am Umfang 26 angeordnet, die mit einer Fläche 27 des Losrads 20 zusammenwirken. Die fünf Tunnelrollen 10 besitzen einen größeren Außendurchmesser 12 (siehe Fig. 2) als die Wälzkörper 25. Dies bedeutet, dass bei geringer Last auf das Radiallager 24 die fünf Tunnelrollen 10 in rollendem Kontakt mit der Wälzlaufbahn 27 des Losrads 20 und mit einer Wälzlaufbahn an der Getriebewelle 34 sind. Dadurch wird erreicht, dass das Radiallager 24 spielfrei ist. Wirkt eine höhere Last auf das Radiallager 24, werden die fünf Tunnelrollen 10 aufgrund ihrer einfederndnachgiebigen Eigenschaften zusammengedrückt, so dass auch die Wälzkörper 25 mit Wälzlaufbahnen im Kontakt stehen.

**Figur 5** zeigt eine Schnittansicht des Radiallagers 24 aus Fig. 4 mit einer Wälzkörperreihe. Der Außendurchmesser 12 (siehe Fig. 2) der Tunnelrolle 10 ist dabei etwas größer als der Außendurchmesser der Wälzkörper 25. Die Wälzkörper 25 bzw. die Tunnelrollen 10 sind derart im Käfig 22 angeordnet, so dass bei Unterschreiten einer Mindestlast am Radiallager 24 die mindestens drei Tunnelrollen 10 spielfrei mit der Wälzlaufbahn 27 des Losrades 20 zusammenwirken. Die Wälzkörper 25 bzw. die Tunnelrollen 10 können mit einer Außenhülse (einem Außenring) eines Lagers zusammenwirken. Dieses Lager kann dann in ein Losrad eingesetzt werden, so dass die Außenhülse des Lagers formschlüssig in dem Losrad 20 sitzt.

**Figur 6** zeigt eine axiale Schnittanschnitt des Radiallagers 24, einen sogenannten Losradkäfig 22, wobei eine Tunnelrolle 10 eine Gruppe 11 bildet, die in einer Wälzkörpertasche 28 angeordnet ist. Insgesamt sind aber mindestens drei Gruppen 11 gleich verteilt am Umfang 26 (siehe Fig. 4) angeordnet, so dass in einer Wälzkörperreihe 24 neben der Vielzahl der Wälzkörper 25 mindestens drei Tunnelrollen 10 angeordnet sind.

**Figur 7** zeigt das Radiallager 24 nach Fig. 6, bei dem jeweils zwei Tunnelrollen 10 eine Gruppe 11 bilden, die in einer Wälzkörpertasche 28 angeordnet sind. Insgesamt sind aber auch hier mindestens drei Gruppen 11 gleich verteilt am Umfang 26 (siehe Fig. 4) verteilt. Weitere dargestellte Elemente sind bereits in Fig. 7 beschrieben.

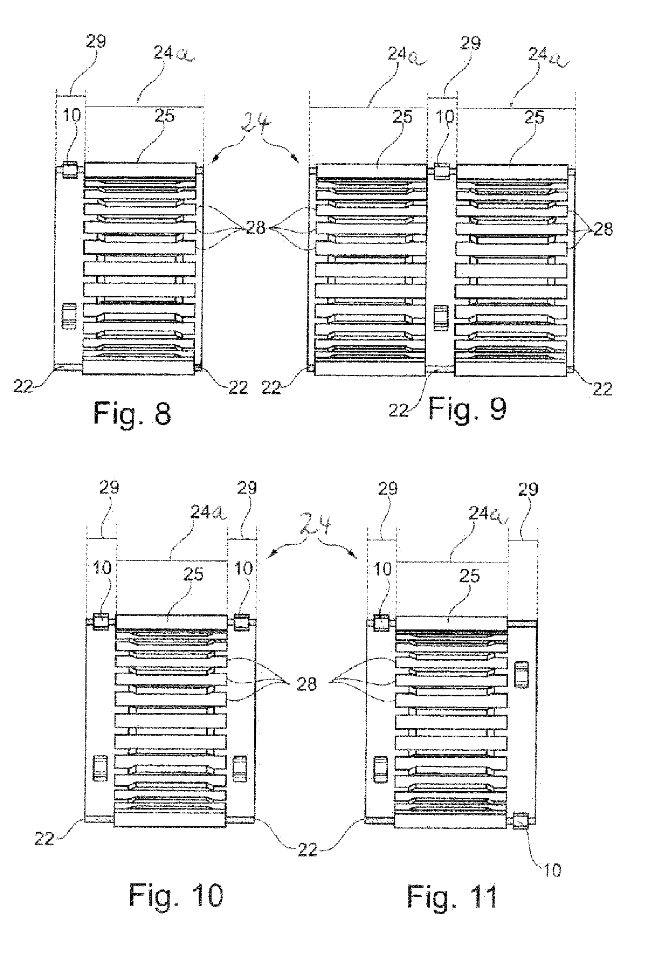

**Figur 8** zeigt eine dritte Ausführungsform eines Radiallagers 24 in axialer Schnittansicht, bei dem einer Wälzkörperreihe 24a mit einer Vielzahl von Wälzkörpern 25 eine weitere Wälzkörperreihe 29 axial zugeordnet ist, die mindestens drei Tunnelrollen 10 aufweist. Somit ist das in Fig. 8 dargestellte Radiallager 24 zweireihig. Sowohl die Wälzköper 25 der ersten Wälzkörperreihe 24a als auch die mindestens drei Tunnelrollen 10 der weiteren Wälzkörperreihe 29 sind in einem gemeinsamen Käfig 22 angeordnet.

Denkbar ist aber auch, dass jede Wälzkörperreihen 24a und 29 einen eigenen Käfig 22 aufweist. Die Käfige 22 der Wälzkörperreihen 24 und 29 sind dann lösbar oder nicht lösbar miteinander verbunden oder voneinander frei. **Figur 9** zeigt eine vierte Ausführungsform eines Radiallagers 24 in axialer Schnittansicht, bei dem zwei Wälzkörperreihen 24a mit jeweils der Vielzahl der Wälzkörper 25 eine weitere Wälzkörperreihe 29 axial zwischengeordnet ist. Auch trägt die Wälzkörperreihe 29 hier mindestens drei Tunnelrollen 10. Andere Ausführungsformen können weitere axiale Zuordnungen der weiteren Wälzkörperreihe 29 vorsehen, so dass diese nicht nur zwischen die beiden Wälzkörperreihen 24a angeordnet sein muss. Das in Fig. 9 dargestellte Radiallager 24 ist somit dreireihig.

Es ist denkbar, dass jede der Reihen in einem separaten Käfig untergebracht ist.

Denkbar ist auch, dass zusätzlich mindestens drei Tunnelrollen 10 in einer oder in beiden Wälzkörperreihen 24 angeordnet sind. Weitere dargestellte Elemente sind bereits in den vorherigen Figuren beschrieben.

**Figur 10** zeigt eine weitere Ausführungsform eines Radiallagers 24 in axialer Schnittansicht, bei dem der Wälzköperreihe 24 mit der Vielzahl der Wälzkörper 25 axial zu beiden Seiten zwei weitere Wälzkörperreihen 29 zugeordnet sind, die jeweils mindestens drei Tunnelrollen 10 in gleich angeordneter Position tragen.

**Figur 11** zeigt eine axiale Schnittansicht eines Radiallagers 24, vergleichbar mit dem nach Figur 10, bei dem jedoch in den beiden weiteren Wälzkörperreihen 29 die Tunnelrollen 10 jeweils an versetzten Positionen angeordnet sind.

Obwohl in der vorstehenden Beschreibung nicht mehr als drei Wälzlagerreihen 24 und 29 dargestellt sind, soll dies nicht als eine Beschränkung der Erfindung aufgefasst werden. Es können auch mehr als drei Wälzlagerreihen 24 und 29 vorgesehen werden, um ein spielfreies und radial vorgespanntes Radiallager 1 für ein Losrad 20 eines Kraftfahrzeuggetriebes zu schaffen, das zudem bei Betrieb geräuschlos ist.

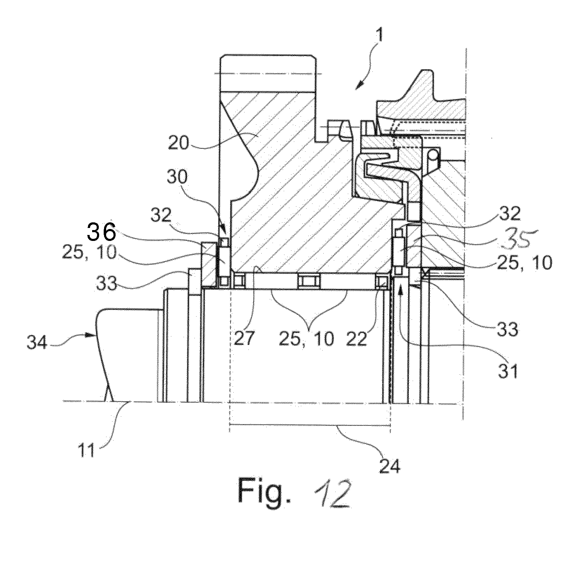

**Figur 12** zeigt eine Teilansicht eines Kraftfahrzeuggetriebes 1 mit der erfindungsgemäßen Losradlagerung im Längsschnitt. Die Losradlagerung umfasst mindestens ein über ein Radiallager 24 auf einer Getriebewelle 34 gelagertes Losrad 20. Das Radiallager 24 ist bereits in Fig. 4 und 5 beschrieben, so dass das Radiallager 24 an dieser Stelle nicht noch einmal erläutert wird.

Senkrecht zu einer Achse 11 der Getriebewelle 34 sind ein erster Anschlag 36 und ein zweiter Anschlag 35 in Form von Laufscheiben für Axiallager angeordnet, die jeweils neben einem Sicherungsring 33, der in einer Ringnut auf der Getriebewelle 34 eingesetzt ist, angeordnet sind.

Zwischen dem ersten Anschlag 36 und dem Losrad 20 ist ein erstes Axiallager 30 angeordnet. Ebenso ist zwischen dem zweiten Anschlag 35 und dem Losrad 20 ein zweites Axiallager 31 angeordnet. Beide Axiallager 30, 31 weisen jeweils einen Käfig 32 auf, der eine Vielzahl von Wälzkörpern 25, vorzugsweise Nadeln, und mindestens eine Tunnelrolle 10 rollend haltert. Wie auch beim Radiallager 24, weist die mindestens eine Tunnelrolle 10 auch hier einen größeren Außendurchmesser 12 (siehe Fig. 2) als die Wälzkörper 25 auf.

Die Ausgestaltung des Käfigs 32 bzw. die Anordnung der mindestens einen Tunnelrolle 10 des ersten und zweiten Axiallagers 30, 31 ist vergleichbar mit der Ausführung des Radiallagers 24 nach Fig. 4 und 5, so dass auch hier auf eine weitere Beschreibung dieser verzichtet wird. Es ist lediglich darauf zu verweisen, dass der Käfig 32 scheibenförmig und axial von Taschen durchbrochen ist. Die Wälzkörper 25 und Tunnelrollen 10 sind lediglich mit ihren Rotationsachsen so ausgerichtet, dass diese unter Last in einer Radialebene die Rotationsachse 11 der Getriebewelle 34 gemeinsam in einem Punkt schneiden.

Im Besonderen ist der Außendurchmesser 12 der mindestens einen Tunnelrolle 10 des ersten und zweiten Axiallagers 30, 31 derart bemessen, dass das Losrad 20 axial vorgespannt auf der Getriebewelle 34 positionierbar ist. Somit ist aufgrund des spielfreien und radial vorgespannten Radiallagers 24 und den spielfrei und axial vorgespannten Axiallagern 30, 31 eine Losradlagerung für ein Kraftfahrzeuggetriebe 1 geschaffen, dass bei Betrieb geräuschlos ist und zudem noch Betriebseigenschaften, wie Reibung bzw. Schleppmoment, optimiert.

## Patentansprüche

1. Losradlagerung für ein Kraftfahrzeuggetriebe (1), das mindestens ein über ein Radiallager (24) auf einer Getriebewelle (34) gelagertes Losrad (20) aufweist, wobei senkrecht zu einer Achse (11) der Getriebewelle (34) ein erster Anschlag (36) angeordnet ist und mindestens ein erstes Axiallager (30) zwischen dem ersten Anschlag (36) und dem Losrad (20) angeordnet ist, wobei das erste Axiallager (30) Wälzkörper (25) aufweist, **dadurch gekennzeichnet, dass** das erste Axiallager (30) mindestens eine Tunnelrolle (10) aufweist *und dass die Tunnelrolle (10) geschlitzt* ist, *wobei die Tunnelrolle (10) einen größeren Außendurchmesser* (12) *als die Wälzkörper (25) aufweist.*

2. Losradlagerung für ein Kraftfahrzeuggetriebe (1) nach Anspruch 1, **dadurch gekennzeichnet, dass** die Losradlagerung ein zweites Axiallager (31) zwischen einem zweiten Anschlag (35) und dem Losrad (20) aufweist.

3. Losradlagerung für ein Kraftfahrzeuggetriebe (1) nach Anspruch 2, **dadurch gekennzeichnet, dass** das zweite Axiallager (31) mindestens eine Tunnelrolle (10) aufweist.

4. Losradlagerung nach Anspruch 1 oder 2, **dadurch gekennzeichnet, dass** die Wälzkörper (25) und die Tunnelrolle (10) in einem Käfig (32) rollend gehalten sind.

5. Losradlagerung für ein Kraftfahrzeuggetriebe (1) nach Anspruch 1 oder 3, **dadurch gekennzeichnet, dass** das erste Axiallager (30) und das zweite Axiallager (31) jeweils mindestens zwei Tunnelrollen (10) in einem Käfig (32) rollend halten.

6. Losradlagerung für ein Kraftfahrzeuggetriebe (1) nach Anspruch 2, **dadurch gekennzeichnet, dass** das Losrad (20) axial spielfrei zwischen den Axiallagern (30, 31) eingespannt ist.

7. Losradlagerung für ein Kraftfahrzeuggetriebe (1) nach Anspruch 1, **dadurch gekennzeichnet, dass** das Radiallager (24) wenigstens eine Tunnelrolle (10) aufweist.

8. Losradlagerung für ein Kraftfahrzeuggetriebe (1) nach Anspruch 7, **dadurch gekennzeichnet, dass** die Tunnelrolle (10) geschlitzt ist.

9. Losradlagerung für ein Kraftfahrzeuggetriebe (1) nach Anspruch 1, 3, oder 7, **dadurch gekennzeichnet, dass** die Tunnelrolle (10) geschlitzt ist und dass die Tunnelrolle (10) mit einem in seinem Verlauf mit mindestens einen Winkel (α) zu einer Rotationsachse (2) der Tunnelrolle (10) in einer Wandung (4) der Tunnelrolle (10) geneigten Längsschlitz (6) versehen ist.

10. Losradlagerung für ein Kraftfahrzeuggetriebe (1) nach Anspruch 1, 3 oder 7, **dadurch gekennzeichnet, dass** die Tunnelrolle (10) geschlitzt ist und dass die Tunnelrolle (10) mit einem in seinem Verlauf mit mindestens einen Winkel (α) zu einer Rotationsachse (2) der Tunnelrolle (10) in einer Wandung (4) der Tunnelrolle (10) verlaufenden Längsschlitz (6) versehen ist, welcher von einem ersten Ende (10₁) der Tunnelrolle (10) zu einem zweiten Ende (10₂) der Tunnelrolle (10) verläuft und welcher vom ersten Ende (10₁) zum zweiten Ende (10₂) der Tunnelrolle (10) entlang der Wandung (4) einen Mittelpunktswinkel (µ) bezüglich des Querschnitts der Tunnelrolle (10) bis 360° überstreicht.

11. Losradlagerung für ein Kraftfahrzeuggetriebe (1) nach Anspruch 1, 3 oder 7, **dadurch gekennzeichnet, dass** die Tunnelrolle (10) geschlitzt ist und dass die Tunnelrolle (10) mit einem in seinem Verlauf mit mindestens einen Winkel (α) zu einer Rotationsachse (2) der Tunnelrolle (10) in einer Wandung (4) der Tunnelrolle (10) geneigten Längsschlitz (6) versehen ist, wobei der Winkel (α) Werte in den Grenzen von 1° bis 45°aufweist.

12. Losradlagerung für ein Kraftfahrzeuggetriebe (1) nach Anspruch 1, 3 oder 7, **dadurch gekennzeichnet, dass** die Tunnelrolle (10) einen größeren Außendurchmesser (12) als die Wälzkörper (25) aufweist.

13. Losradlagerung für ein Kraftfahrzeuggetriebe (1) nach Anspruch 1, 4, 7 oder 12, **dadurch gekennzeichnet, dass** die Wälzkörper (25) als Rollen ausgebildet sind.

## Claims

1. Idler gear bearing for a motor-vehicle gearbox (1) which has at least one idler gear (20) which is mounted on a gearbox shaft (34) via a radial bearing (24), a first stop (36) being arranged perpendicularly with respect to an axis (11) of the gearbox shaft (34), and at least one first axial bearing (30) being arranged between the first stop (36) and the idler gear (20), the first axial bearing (30) having rolling bodies (25), **characterized in that** the first axial bearing (30) has at least one tube roller (10), and **in that** the tube roller (10) is slotted, the tube roller (10) having a greater external diameter (12) than the rolling bodies (25).

2. Idler gear bearing for a motor-vehicle gearbox (1) according to Claim 1, **characterized in that** the idler gear bearing has a second axial bearing (31) between a second stop (35) and the idler gear (20).

3. Idler gear bearing for a motor-vehicle gearbox (1) according to Claim 2, **characterized in that** the second axial bearing (31) has at least one tube roller (10).

4. Idler gear bearing according to Claim 1 or 2, **characterized in that** the rolling bodies (25) and the tube roller (10) are held in a rolling manner in a cage (32).

5. Idler gear bearing for a motor-vehicle gearbox (1) according to Claim 1 or 3, **characterized in that** the first axial bearing (30) and the second axial bearing (31) in each case hold at least two tube rollers (10) in a rolling manner in a cage (32).

6. Idler gear bearing for a motor-vehicle gearbox (1) according to Claim 2, **characterized in that** the idler gear (20) is clamped in between the axial bearings (30, 31) axially without play.

7. Idler gear bearing for a motor-vehicle gearbox (1) according to Claim 1, **characterized in that** the radial bearing (24) has at least one tube roller (10).

8. Idler gear bearing for a motor-vehicle gearbox (1) according to Claim 7, **characterized in that** the tube roller (10) is slotted.

9. Idler gear bearing for a motor-vehicle gearbox (1) according to Claim 1, 3 or 7, **characterized in that** the tube roller (10) is slotted, and **in that** the tube roller (10) is provided with a longitudinal slot (6), the course of which is inclined in a wall (4) of the tube roller (10) at at least an angle (α) with respect to a rotational axis (2) of the tube roller (10).

10. Idler gear bearing for a motor-vehicle gearbox (1) according to Claim 1, 3 or 7, **characterized in that** the tube roller (10) is slotted, and **in that** the tube roller (10) is provided with a longitudinal slot (6), the course of which is inclined in a wall (4) of the tube roller (10) at at least an angle (α) with respect to a rotational axis (2) of the tube roller (10), which longitudinal slot (6) runs from a first end (10₁) of the tube roller (10) to a second end (10₂) of the tube roller (10) and which sweeps over a central angle (µ) with regard to the cross section of the tube roller (10) of up to 360° along the wall (4) from the first end (10₁) to the second end (10₂) of the tube roller (10).

11. Idler gear bearing for a motor-vehicle gearbox (1) according to Claim 1, 3 or 7, **characterized in that** the tube roller (10) is slotted, and **in that** the tube roller (10) is provided with a longitudinal slot (6), the course of which is inclined in a wall (4) of the tube roller (10) at at least an angle (α) with respect to a rotational axis (2) of the tube roller (10), the angle (α) having values within the limits from 1° to 45°.

12. Idler gear bearing for a motor-vehicle gearbox (1) according to Claim 7, **characterized in that** the tube roller (10) has a greater external diameter (12) than the rolling bodies (25).

13. Idler gear bearing for a motor-vehicle gearbox (1) according to Claim 1, 4, 7 or 12, **characterized in that** the rolling bodies (25) are configured as rollers.

## Revendications

1. Palier de roue folle pour une transmission de véhicule automobile (1), qui comprend au moins une roue folle (20) montée sur un arbre de transmission (34) par le biais d'un palier radial (24), une première butée (36) étant disposée perpendiculairement à un axe (11) de l'arbre de transmission (34) et au moins un premier palier axial (30) étant disposé entre la première butée (36) et la roue folle (20), le premier palier axial (30) comprenant des corps de roulement (25), **caractérisé en ce que** le premier palier axial (30) comprend au moins un rouleau en tunnel (10), et **en ce que** le rouleau en tunnel (10) est fendu, le rouleau en tunnel (10) présentant un plus grand diamètre extérieur (12) que les corps de roulement (25).

2. Palier de roue folle pour une transmission de véhicule automobile (1) selon la revendication 1, **caractérisé en ce que** le palier de roue folle comprend un deuxième palier axial (31) entre une deuxième butée (35) et la roue folle (20).

3. Palier de roue folle pour une transmission de véhicule automobile (1) selon la revendication 2, **caractérisé en ce que** le deuxième palier axial (31) comprend au moins un rouleau en tunnel (10).

4. Palier de roue folle selon la revendication 1 ou 2, **caractérisé en ce que** les corps de roulement (25) et le rouleau en tunnel (10) sont maintenus de manière à rouler dans une cage (32).

5. Palier de roue folle pour une transmission de véhicule automobile (1) selon la revendication 1 ou 3, **caractérisé en ce que** le premier palier axial (30) et le deuxième palier axial (31) maintiennent respectivement au moins deux rouleaux en tunnel (10) de manière à rouler dans une cage (32).

6. Palier de roue folle pour une transmission de véhicule automobile (1) selon à revendication 2, **caractérisé en ce que** la roue folle (20) est serrée axialement sans jeu entre les paliers axiaux (30, 31).

7. Palier de roue folle pour une transmission de véhicule automobile (1) selon la revendication 1, **caractérisé en ce que** le palier radial (24) comprend au moins un rouleau en tunnel (10).

8. Palier de roue folle pour une transmission de véhicule automobile (1) selon la revendication 7, **caractérisé en ce que** le rouleau en tunnel (10) est fendu.

9. Palier de roue folle pour une transmission de véhicule automobile (1) selon la revendication 1, 3 ou 7, **caractérisé en ce que** le rouleau en tunnel (10) est fendu, et **en ce que** le rouleau en tunnel (10) est pourvu d'une fente longitudinale (6) dont l'allure est inclinée d'au moins un angle (α) par rapport à un axe de rotation (2) du rouleau en tunnel (10) dans une paroi (4) du rouleau en tunnel (10).

10. Palier de roue folle pour une transmission de véhicule automobile (1) selon la revendication 1, 3 ou 7, **caractérisé en ce que** le rouleau en tunnel (10) est fendu et **en ce que** le rouleau en tunnel (10) est pourvu d'une fente longitudinale (6) dont l'allure s'étend suivant au moins un angle (α) par rapport à un axe de rotation (2) du rouleau en tunnel (10) dans une paroi (4) du rouleau en tunnel (10), laquelle fente longitudinale s'étend à partir d'une première extrémité (10₁) du rouleau en tunnel (10) jusqu'à une deuxième extrémité (10₂) du rouleau en tunnel (10) et laquelle fente longitudinale couvre un angle au centre (µ) de jusqu'à 360° par rapport à la section transversale du rouleau en tunnel (10) à partir de la première extrémité (10₁) jusqu'à la deuxième extrémité (10₂) du rouleau en tunnel (10) le long de la paroi (4).

11. Palier de roue folle pour une transmission de véhicule automobile (1) selon la revendication 1, 3 ou 7, **caractérisé en ce que** le rouleau en tunnel (10) est fendu et **en ce que** le rouleau en tunnel (10) est pourvu d'une fente longitudinale (6) dont l'allure est inclinée d'au moins un angle (α) par rapport à un axe de rotation (2) du rouleau en tunnel (10) dans une paroi (4) du rouleau en tunnel (10), l'angle (α) présentant des valeurs dans les limites de 1° à 45°.

12. Palier de roue folle pour une transmission de véhicule automobile (1) selon la revendication 7, **caractérisé en ce que** le rouleau en tunnel (10) présente un plus grand diamètre extérieur (12) que les corps de roulement (25).

13. Palier de roue folle pour une transmission de véhicule automobile (1) selon la revendication 1, 4, 7 ou 12, **caractérisé en ce que** les corps de roulement (25) sont réalisés sous forme de rouleaux.
